# FASCICULE DE BREVET EUROPEEN

(11) **EP 0 599 735 B1**
(45) Date de publication et mention de la délivrance du brevet: **04.04.2001**
(21) Numéro de dépôt: 93402858.0
(22) Date de dépôt: 25.11.1993
(51) Int. Cl.: H04L 12/56

(54) **Dispositif de traitement de cellules pour équipement de réseau temporel asynchrone de communication**
Zellbehandlungsvorrichtung für ein Zeit-Asynchrones Übertragungsnetz
Cell handling device for a time asynchronous communication network

(30) Priorité: 26.11.1992 FR 9214234
(43) Date de publication de la demande: 01.06.1994
(73) Titulaire: ALCATEL, 75382 Paris Cédex 08 (FR)
(72) Inventeur: Chartie, Gérard, F-22560 Trebeurden (FR); Leveque, Pierre, F-22140 Begard (FR); Albouy, Pierre, F-22300 Lannion (FR)
(74) Mandataire: Lamoureux, Bernard

(56) Documents cités:
- EP-A- 0 338 558
- EP-A- 0 468 498

## Description

L'invention concerne les dispositifs de traitement et plus particulièrement d'orientation de cellules de transfert d'information, telles que les cellules dites ATM, qui comportent classiquement un champ d'information précédé d'un champ d'en-tête contenant une indication directe ou indirecte de destination, ces dispositifs de traitement étant destinés à être inclus dans des équipements de réseaux temporels asynchrones de communication à large bande.

Les transmissions d'information dans les réseaux de communication à large bande exploitant une technique temporelle asynchrone sont assurées par l'intermédiaire d'unités de transfert d'information appelées cellules à mode de transfert asynchrone, telles les cellules dites ATM, qui ont une structure imposée et qui sont susceptibles d'être traitées par tous les équipements constitutifs essentiels des réseaux, tels que les terminaux, les multiplexeurs, les brasseurs, les commutateurs...

Chaque cellule comporte un champ d'information qui est précédé d'un champ d'en-tête dont les formats respectifs sont fixes, ces champs comprennent respectivement quarante-huit octets et cinq octets dans le cas de cellules ATM connues.

L'orientation d'une cellule au niveau d'un équipement, par exemple d'une cellule entrant dans un terminal d'échange, implique une prise en compte d'au moins l'en-tête de cette cellule par l'équipement afin de déterminer la destination vers laquelle elle doit être aiguillée par l'équipement lui-même.

Dans une forme classique de réalisation, les équipements de réseau large bande qui sont confrontés à ce problème comportent des dispositifs de traitement pour assurer l'orientation des cellules en fonction de leurs destinations respectives. Ces dispositifs comprennent une mémoire d'alignement de cellule, du type premier entré-premier sorti couramment dénommé FIFO, à la sortie de laquelle sont prélevés les octets du champ d'en-tête de chaque cellule, ainsi qu'éventuellement un certain nombre d'octets alors positionnés dans le champ d'information, par exemple les quatre premiers octets de ce champ. Les octets ainsi prélevés sont exploités notamment à des fins d'aiguillage de la cellule dont ils sont issus.

De manière connue, la mémoire d'alignement assure éventuellement une adaptation de débit et/ou une résolution de plésiosynchronisme au profit de l'équipement qui la comporte.

Une mémoire retardatrice, de type FIFO, est connectée en aval de la mémoire d'alignement pour recevoir successivement tous les octets qui composent chaque cellule, elle permet de retarder la transmission de chaque cellule le temps que soit déterminée l'orientation à lui donner. La sortie de la mémoire retardatrice est reliée à une entrée d'un circuit d'aiguillage de cellule qui est commandé en fonction des indications extraites des données constituant les octets prélevés en sortie de mémoire d'alignement dans le champ d'en-tête et éventuellement en début de champ d'information, comme indiqué plus haut.

Le retard imposé à une cellule par la mémoire retardatrice est fixé de manière à permettre le traitement des octets de champ d'en-tête prélevés en sortie de mémoire d'alignement et la commande correspondante du circuit d'aiguillage, avant apparition du premier octet de la cellule en sortie de mémoire retardatrice.

Les inconvénients essentiels d'un tel dispositif sont qu'il implique la mise en oeuvre d'une mémoire retardatrice de cellules qui occupe un emplacement relativement important et par conséquent coûteux du circuit intégré dans lequel ce dispositif est implanté, que l'usage de la mémoire retardatrice est éventuellement pénalisant lorsque des débits élevés, par exemple de l'ordre de 600MB/s, sont envisagés et que le retard imposé par cette mémoire retardatrice est normalement fixe et par conséquent lié à une valeur déterminée de débit de données pour un composant donné.

L'invention propose donc un dispositif de traitement de cellules pour équipement de réseau temporel asynchrone de communication qui transmet des cellules, notamment de type ATM, dotées chacune d'un champ d'en-tête et d'un champ d'information ayant des formats déterminés.

Selon une caractéristique de l'invention, le dispositif de traitement de cellules comporte une mémoire, de type premier entré-premier sorti dit FIFO, qui reçoit les cellules successivement adressées au dispositif en vue de les transférer vers un circuit d'aiguillage après que ce dernier ait reçu une indication d'aiguillage d'un agencement de traitement de contexte, connu en soi, recevant lui-même des indications notamment de routage figurant sous forme de données au début de chaque cellule, au moins dans le champ d'en-tête. La mémoire du dispositif dispose de deux ports de sortie distincts qui sont respectivement reliés l'un en entrée du circuit d'aiguillage et l'autre en entrée de l'agencement de traitement de contexte, elle comporte aussi deux ports de commande en lecture distincts pour permettre deux lectures décalées dans le temps des mêmes données de cellule et par conséquent un décalage entre les instants d'apparition d'une même donnée de cellule au niveau des deux ports de sortie.

L'invention, ses caractéristiques et ses avantages sont précisés dans la description qui suit en liaison avec les figures évoquées ci-dessous.

La figure 1 présente un schéma de principe d'un dispositif de traitement de cellules ATM connu.

La figure 2 présente un schéma d'un dispositif de traitement de cellules ATM selon l'invention.

La figure 3 présente un module élémentaire pour mémoire FIFO de dispositif de traitement tel que schématisé en figure 2.

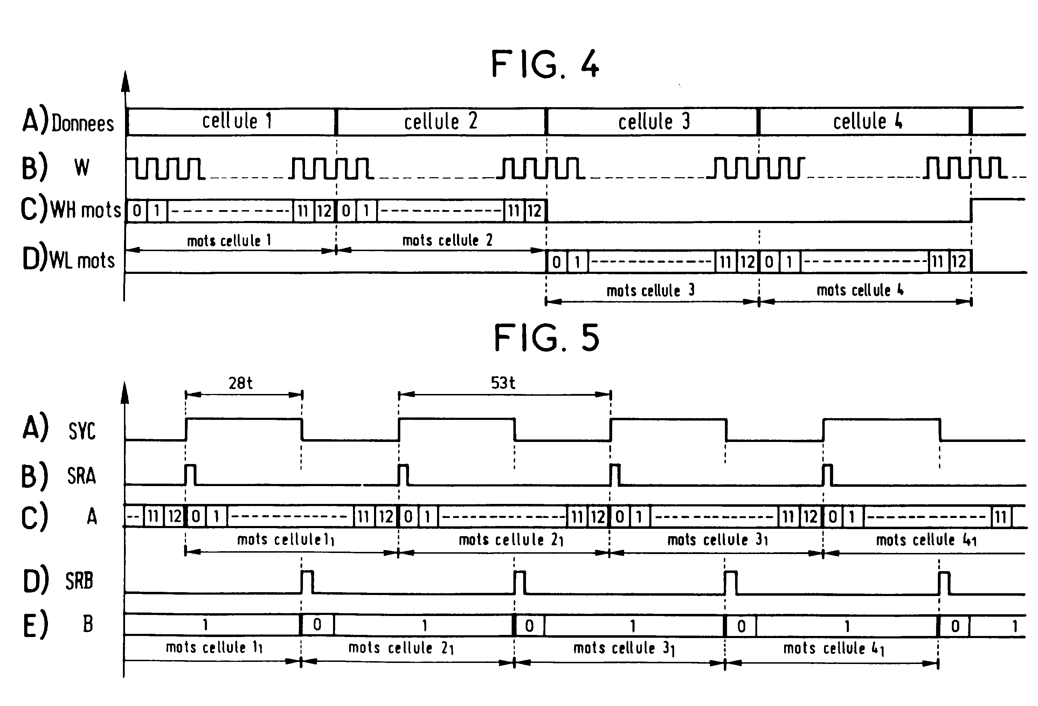

Les figures 4A à 4D et 5A à 5E présentent respectivement des chronogrammes d'écriture et de lecture de la mémoire FIFO de la figure 2.

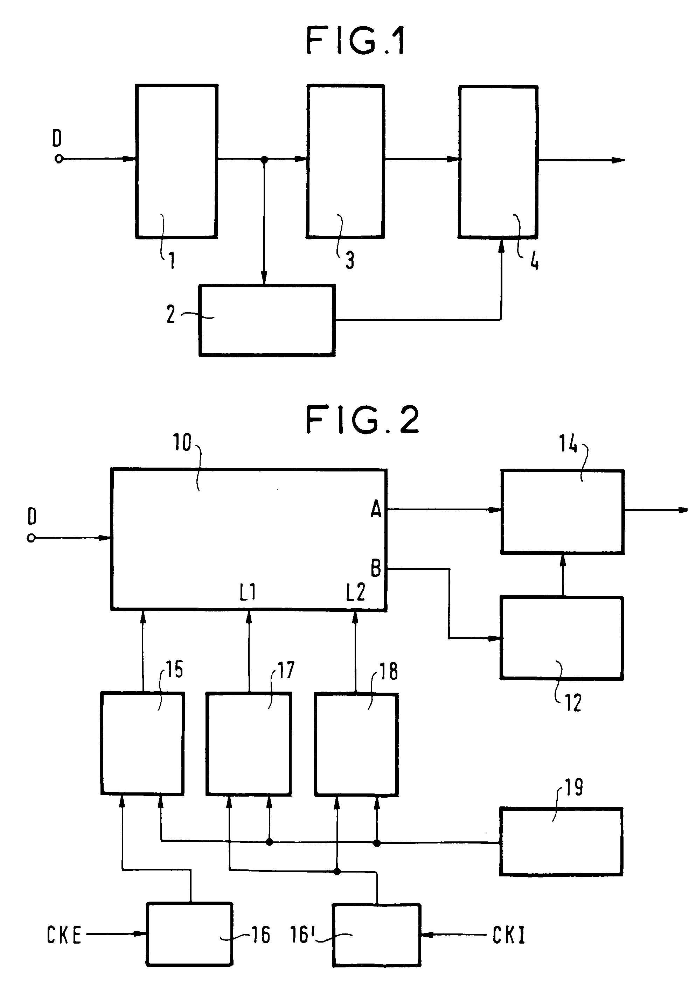

Le dispositif de traitement de cellules ATM connu, présenté en figure 1, est destiné à être inclus dans un équipement de réseau de communications à large bande exploitant la technique temporelle asynchrone dite ATM, définie entre autre dans un article de Mrs COUDREUSE, PAYS et TROUVAT, intitulé "La technique temporelle asynchrone" qui est paru dans le numéro 3 de 1990 de la revue "Commutation et Transmission" publiée à Paris, France par SOTELEC.

Ce dispositif de traitement comporte une mémoire d'alignement 1, de type FIFO, recevant successivement les cellules entrantes reçues par exemple comme une suite d'octets et remplissant les fonctions d'adaptation de débit et/ou de résolution de plésiosynchronisme pour ces cellules entrantes, comme indiqué précédemment.

La sortie de la mémoire d'alignement est reliée en parallèle à un agencement de traitement de contexte 2 et à une mémoire retardatrice 3.

L'agencement de traitement de contexte 2 est susceptible de prendre en compte au moins certains des octets qui figurent en début de cellule notamment dans le champ apparaissant en tête de chaque cellule successivement transmise par la mémoire d'alignement 1, il en déduit classiquement, en exploitant une mémoire vive non représentée, l'orientation à donner à la cellule dont le champ d'en-tête vient d'être reçu.

La mémoire retardatrice 3 est habituellement elle aussi de type FIFO, elle a pour fonction de retarder la transmission d'une cellule de la mémoire d'alignement 1 à un circuit d'aiguillage 4 jusqu'au moment où ce circuit 4 a reçu l'indication d'aiguillage qu'il attend de l'agencement de traitement 2 pour la cellule alors en attente d'aiguillage.

Le circuit d'aiguillage 4 assure alors la transmission de la cellule comme indiqué, éventuellement après l'avoir traitée en vue de cette transmission.

Le dispositif de traitement présenté en figure 2 est destiné à transmettre des cellules structurées de la même façon que celles envisagées avec le dispositif connu présenté en figure 1, soit avec chacune un champ d'en-tête et un champ pour l'information utile à transmettre qui sont de formats déterminés, ces formats étant respectivement de cinq et de quarante huit octets dans le cas des cellules ATM standardisées, ici prises en compte. Le début de chaque cellule contient, au moins au niveau du champ d'en-tête, des indications de routage et/ou de destination relatives à la cellule qui le comporte.

Selon l'invention, une mémoire 10, de type FIFO, disposant d'une structure particulière est exploitée pour assurer simultanément l'alignement et le retard nécessaires, ce qui permet d'éliminer la mémoire retardatrice prévue dans les réalisations antérieures.

Comme précédemment la mémoire 10 reçoit les cellules successives par un port D à "N" entrées parallèles, dans l'exemple de réalisation envisagé ici pour un dispositif de traitement destiné à fonctionner avec des cellules ATM, ce port comporte trente-deux entrées dans la mesure où il est prévu de grouper par mots de trente-deux bits cinquante deux des cinquante trois octets que comporte chaque cellule; l'octet non pris en compte de chaque cellule est l'octet de rang cinq du champ d'en-tête, c'est en effet un octet de contrôle que l'équipement reçoit et traite avant de le réintroduire et de l'émettre, sans le transmettre via la mémoire 10.

Dans une forme de réalisation la mémoire 10 permet de stocker simultanément plusieurs cellules, par exemple quatre, soit un nombre "P" de bits égal au produit du nombre "M" de mots appartenant aux cellules en mémoire par le nombre "N" de bits d'un mot.

Selon l'invention, la mémoire 10 comporte deux ports A et B parallèles à sorties multiples, ici au nombre de trente deux sorties par port. Ces deux ports A et B sont respectivement raccordés l'un à un circuit d'aiguillage 14 et l'autre à un agencement de traitement de contexte 12, qui sont fonctionnellement analogues au circuit d'aiguillage 4 et à l'agencement de traitement de contexte 2 évoqués en liaison avec la figure 1.

La mémoire 10 est commandée en écriture par un premier générateur de pointeurs 15 qui rythme les écritures successives des mots obtenus des cellules successives, chacun à partir de quatre octets successifs de cellule, ce premier générateur étant piloté par une base de temps 16 contrôlée par le signal d'horloge externe CKE associé aux cellules ATM entrant en mémoire 10.

La sortie des mots au niveau des deux ports A et B est ici déclenchée par deux générateurs de pointeurs 17 et 18 reliés chacun à l'un des ports de commande lecture L1, L2 de la mémoire et respectivement affectés chacun à l'un de ces ports de sortie. Ces deux générateurs 17 et 18 sont pilotés par une base de temps 16' contrôlée par un second signal d'horloge CKI, ici localement produit; ils sont associés par l'intermédiaire de dispositifs de synchronisation non figurés, à un gestionnaire de mémoire 19, de même que le générateur de pointeurs 15.

Le gestionnaire de mémoire 19 est susceptible d'être de type usuel agissant de manière connue en soi, pour différents états de la mémoire 10, notamment lorsque cette mémoire 10 est soit pratiquement vide, soit pratiquement pleine.

Dans la mesure où des octets prélevés du champ d'en-tête et éventuellement du champ d'information d'une cellule doivent être pris en compte par l'agencement de traitement de contexte 12 préalablement à la transmission de la cellule qui les comporte, il est prévu que cet agencement reçoive, via le port B, ces octets prélevés et ce avant qu'ils ne soient transmis, par ailleurs, au circuit d'aiguillage 14, par le port A.

Dans une forme préférée de réalisation, la mémoire 10 est composée de modules élémentaires O de mémorisation qui permettent chacun de mémoriser deux des "P" éléments binaires qu'est susceptible de stocker cette mémoire.

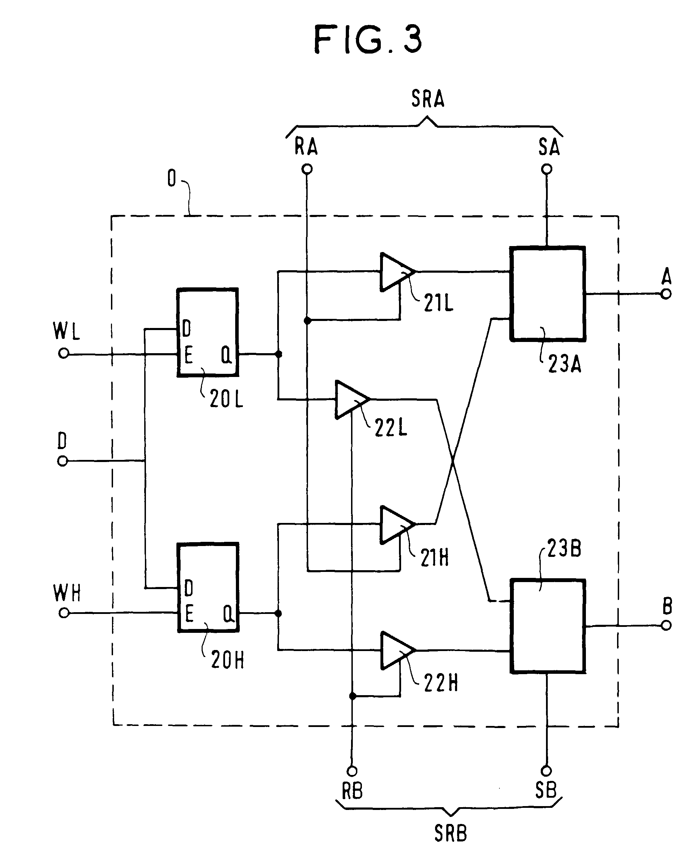

Chaque module élémentaire de mémoire O comporte par exemple deux verrous 20H et 20L, montrés en figure 3, ayant la même entrée D de données et des entrées de commande en écriture E distinctes et respectivement référencées WH pour le verrou 20H et WL pour le verrou 20L.

Ceci permet, par exemple, d'exploiter alternativement les verrous 20H pour la mémorisation des bits de deux cellules successives, soit ici des cellules auxquelles on attribue des rangs 1 et 2, puis les verrous 20L pour les bits des deux cellules suivantes, dont les rangs seront donc 3 et 4 dans la réalisation envisagée, chaque cellule étant mémorisée mot par mot ainsi que le montrent les chronogrammes 4A, 4B, 4C, 4D symbolisant respectivement le train de cellules entrantes, les temps d'horloge en écriture W en écriture, les écritures successives des treize mots des cellules sous l'action des signaux WH et WL produits par le générateur 17 de pointeurs en écriture que régit la base de temps 16.

Par ailleurs, une sortie Q de chaque verrou 20H ou 20L, attaque une paire de portes 21 et 22, de type trois états, contrôlées par des signaux de sélection RA et RB distincts, telle la paire de portes 21H et 22H reliée à la sortie Q du verrou 20H ou celle composée des portes 21L et 22L.

Deux circuits logiques 23A et 23B, ici identiques, sont associée à l'ensemble formé par les verrous 20H, 20L et les portes 21H, 21L, 22H et 22L dans un même module élémentaire 0 pour permettre de transmettre à l'une ou l'autre des sorties A et B de ce module, les bits stockés dans l'une ou l'autre des verrous 20H, 20L, en fonction de signaux de sélection SA et SB.

Dans la réalisation envisagée les signaux SA et RA, d'une part, et les signaux SB et RB, d'autre part, sont respectivement produits les uns par le générateur de pointeurs 17 et les autres par le générateur de pointeurs 18 que la base de temps 16'régit.

Dans un exemple de réalisation, le circuit logique 23A qui comporte la sortie A du module, est susceptible d'être séparément attaqué par les deux portes 21H et 21L, alors que le circuit logique 23B qui comporte la sortie B du module est susceptible d'être séparément attaqué par les deux portes 22H et 22L.

Les bits temporairement stockés dans l'un ou l'autre des verrous 20H ou 20L après avoir été préalablement inscrits dans l'un ou l'autre d'entre eux sous l'action de l'un ou l'autre des deux signaux WH ou WL comme indiqué plus haut, sont susceptibles d'être fournis à l'une des sorties A ou B du module en fonction des combinaisons de signaux RA, SA, RB, SB suivantes, tant qu'ils ne sont pas remplacés par un bit de même rang d'une cellule de même rang:
- si RA=1 et SA=1 le bit stocké dans le verrou 20H est disponible au niveau de la sortie A,
- si RA=1 et SA=0 le bit stocké dans le verrou 20L est disponible au niveau de la sortie A,
- si RB=1 et SB=1 le bit stocké dans le verrou 20H est disponible au niveau de la sortie B,
- si RB=1 et SB=0 le bit stocké dans le verrou 20L est disponible au niveau de la sortie B.

Dans la mesure où les octets du champ d'en-tête d'une cellule et éventuellement du début du champ d'information qu'il précède, sont stockés en mémoire 10, il est donc possible de déclencher la transmission de ces octets à l'agencement de traitement de contexte 12 associé à la mémoire 10 par l'intermédiaire des signaux RB et SB.

Ceci peut s'effectuer préalablement à la transmission de ce mêmes octets en tête de la cellule qui les comporte, sous l'action des signaux RA et SA, si ces derniers sont temporellement décalés par rapport aux signaux SB, RB, ainsi qu'on le voit sur les chronogrammes référencés 5A à 5E.

Dans l'exemple envisagé, concernant des cellules ATM à cinquante trois octets, on dispose donc d'une possibilité de décalage comprise entre zéro et cinquante trois temps d'octets. Ce décalage peut être programmé à la demande, par exemple en fonction du temps de transfert d'une cellule de manière à évoluer en fonction de la vitesse de focntionnement. La mise en oeuvre d'une base de temps 16' programmable permet par exemple une telle évolution du décalage.

Dans une forme de réalisation correspondant à un débit nominal de 600MB/s, un décalage en avance des signaux RB, SB est choisi de vingt-huit temps d'octet "t" par rapport aux signaux RA, SA, ce décalage étant représenté sur le chronogramme 5A par les portions de valeur binaire un du signal de synchronisation SYC dont la période "T" est égale à cinquante trois "t".

Les fronts montants du signal SYC servent à engendrer un signal impulsionnel de synchronisation SRA - chronogramme 5B - de période "T" rythmant les apparitions successives des cellules au niveau de la sortie A de la mémoire 10. Ce signal de synchronisation SRA déclenche l'adressage successif en lecture des modules de mémoire O adressés par les signaux de sélection RA, SA, de manière qu'apparaissent successivement à la sortie A à chaque période les treize mots d'une cellule, les quatre cellules simultanément présentes dans la mémoire 10 à un instant quelconque donné apparaissant successivement au cours de quatre périodes "T" successives à la sortie A, dans l'ordre où elles ont été reçues.

Le chronogramme 5C symbolise ainsi l'apparition successive de quatre cellules 11, 21, 31, 41 au niveau de la sortie A de la mémoire 10, chacune comportant treize mots de trente deux bits, seuls les mots de rang 0, 1, 11 et 12 de chaque cellule étant ici figurés.

Les fronts descendants du signal SYC - chronogramme 5D - servent à engendrer un signal impulsionnel de synchronisation SRB de période "T" rythmant les apparitions successives des cellules au niveau de la sortie B de la mémoire 10, seuls apparaissant à chaque période les mots qui sont destinés à être pris en compte par l'agencement de traitement de contexte 12 pour une des cellules alors mémorisées, soit par exemple les mots de rang 0 et 1 des cellules dans la réalisation envisagée.

L'apparition des mots à traiter pour une cellule donnée, soit par exemple les mots 0 et 1 de la cellule 21 au niveau de la sortie B précède celle des mêmes mots de la même cellule au niveau de la sortie A, le premier d'entre eux étant présent le temps nécessaire à sa prise en compte par l'agencement 12, le second étant susceptible d'être présent jusqu'à l'apparition d'une nouvelle impulsion de synchronisation SRB, ainsi qu'on le voit sur le chronogramme 5E.

Comme indiqué précédemment, il est possible de faire fonctionner le dispositif de traitement selon l'invention à une fréquence différente par modification du déphasage entre signaux SRA et SRB, c'est-à-dire par modification du rapport cyclique du signal SYC, au niveau de la base de temps et par exemple par simple programmation.

De manière complémentaire, il est possible par programmation d'adapter la synchronisation de la lecture en mémoire 10 par rapport à l'écriture en fonction du rapport existant entre les fréquences respectives fixées pour ces deux opérations.

En particulier, si l'écriture est plus rapide que la lecture le début de la lecture peut être programmé après le début de l'écriture du second mot d'une cellule, car la lecture ne rattrapera jamais l'écriture. Par contre, si la lecture est plus rapide que l'écriture, le début de la lecture d'une cellule ne devra par exemple n'être programmé qu'après la fin de l'écriture de cette cellule.

## Revendications

1. Dispositif de traitement de cellules, pour équipement de réseau temporel asynchrone de communication qui transmet des cellules dotées chacune d'un champ d'en-tête et d'un champ d'information ayant des formats déterminés, caractérisé en ce qu'il comporte une mémoire (10), de type premier entré-premier sorti, dit FIFO, qui reçoit les cellules successivement adressées au dispositif au rythme d'une première horloge en vue de les transférer vers un circuit d'aiguillage (14) au rythme d'une seconde horloge après que ce circuit d'aiguillage ait reçu une indication d'aiguillage d'un agencement de traitement de contexte (12), connu en soi, recevant lui-même des indications notamment de routage figurant sous forme de données au début de chaque cellule, au moins dans le champ d'en-tête, en ce que la mémoire (10) dispose de deux ports de sortie (A, B) distincts qui sont respectivement reliés l'un en entrée du circuit d'aiguillage et l'autre en entrée de l'agencement de traitement de contexte, et en ce que cette mémoire (10) comporte deux ports de commande en lecture (L1, L2) distincts pour permettre de produire des sorties décalées dans le temps de mêmes données de cellule au niveau des deux ports de sortie.

2. Dispositif de traitement de cellules, selon la revendication 1, caractérisé en ce que la mémoire (10), constituée de modules mémoires élémentaires (0) de donnée de cellule, est placée sous le contrôle d'un générateur de pointeur d'écriture (15) piloté par une première base de temps (16) au rythme de la première horloge et de deux générateurs de pointeurs de lecture (17, 18) pilotés par une seconde base de temps (16') qui, rythmée par la seconde horloge, régit par leur intermédiaire le décalage temporel introduit pour les sorties des mêmes données de cellule au niveau des ports de sortie de la mémoire.

3. Dispositif de traitement de cellules, selon la revendication 2, caractérisé en ce que la seconde base de temps (16') est de type programmable pour permettre une variation du décalage temporel entre sorties de données de cellule au niveau des ports de sortie de la mémoire.

4. Dispositif de traitement de cellules, selon au moins l'une des revendications 2 et 3, caractérisé en ce que la mémoire (10), comporte des modules mémoires élémentaires, comportant chacun deux verrous de mémorisation de donnée (20L, 20H) ayant une même entrée (D) de donnée de cellule, une entrée de commande en écriture (E), distincte, et une sortie de données (Q) qui, distincte, est reliée à deux portes (21H, 22H, ou 21L, 22L), différentes, contrôlées chacune par un générateur de pointeurs de lecture (17, 18), différent, via celui des ports de commande de lecture (L1, L2) qui dessert ce générateur.

5. Dispositif de traitement de cellules, selon au moins l'une des revendications 2 et 3, dont la mémoire (10) a une capacité de "P" bits correspondant pratiquement à une mise en mémoire de quatre cellules, caractérisé en ce que les modules mémoires élémentaires que cette mémoire comporte ont leurs deux verrous de mémorisation (20L, 20H) alternativement commandées en écriture avec une période correspondant au double de la durée d'une cellule et permettent une mémorisation alternée au niveau d'un même module mémoire d'une donnée de cellule et de la donnée de même rang de la seconde cellule qui suit.

## Claims

1. A cell processor, for equipment units of an asynchronous transfer mode communication network which transmits cells each having a header field and a data field, which fields have particular formats, characterized in that it includes a first in/first out (FIFO) memory (10) which receives the cells successively addressed to the processor at the timing rate of a first clock in order to transfer them to a switching circuit (14) at the rate of a second clock after said switching circuit has received a switching indication from a context processor (12), known in the art, itself receiving indications, in particular routing indications, appearing in the form of data at the start of each cell, at least in the header field, in that the memory (10) has two separate output ports (A, B) which are respectively connected to the input of the switching circuit and to the input of the context processor, and in that the memory (10) has two separate read control ports (L1, L2) for producing time-shifted outputs of the same cell data at the two output ports.

2. A cell processor according to claim 1, characterized in that the memory (10) is made up of cell data memory modules (0) and is under the control of a write pointer generator (15) controlled by a first timebase (16) at the timing rate of the first clock and two read pointer generators (17, 18) controlled by a second timebase (16') which is timed by the second clock and which controls via the latter the time-shift introduced for the output of the same cell data at the output ports of the memory.

3. A cell processor according to claim 2, characterized in that the second timebase (16') is programmable to enable variation of the time-shift between output of cell data at the output ports of the memory.

4. A cell processor according to claim 2 and/or claim 3, characterized in that the memory (10) includes memory modules each including two data storage latches (20L, 20H) having a common cell data input (D), a separate write control input (E) and a separate data output (Q) which is connected to two different gates (21H, 22H or 21L, 22L) each of which is controlled by a different read pointer generator (17, 18) via whichever of the read control ports (L1, L2) serves that generator.

5. A cell processor according to claim 2 and/or claim 3, wherein the memory (10) has a capacity of "P" bits corresponding practically to storage of four cells, characterized in that the memory modules of the memory have their two memory latches (20L, 20H) commanded alternately in write mode with a period corresponding to twice the duration of a cell and alternately store, in the same memory module, cell data and data of the same rank from the second following cell.

## Patentansprüche

1. Vorrichtung zur Verarbeitung von Zellen für ein Gerät eines zeitasynchronen Übertragungsnetzes, das Zellen überträgt, die jeweils mit einem Kopffeld und einem Informationsfeld mit bestimmten Formaten ausgestattet sind, dadurch gekennzeichnet, daß sie einen Speicher (10) vom Typ First-in-First-out, genannt FIFO, aufweist, der die Zellen empfängt, die nacheinander im Takt eines ersten Zeitgebers an die Vorrichtung geschickt werden, um sie zu einer Verteilerschaltung (14) im Takt eines zweiten Zeitgebers zu übertragen, nachdem diese Verteilerschaltung eine Lenkungsangabe von einer an sich bekannten Anordnung (12) zur Kontextverarbeitung empfangen hat, die wiederum insbesondere Routingangaben empfängt, die in Form von Daten am Anfang jeder Zelle wenigstens im Kopffeld erscheinen, daß der Speicher (10) über zwei getrennte Ausgangsanschlüsse (A, B) verfügt, die entsprechend verbunden sind, der eine mit dem Eingang der Verteilerschaltung und der andere mit dem Eingang der Anordnung zur Kontextverarbeitung, und daß dieser Speicher (10) zwei getrennte Lesesteueranschlüsse (Ll, L2) aufweist, um die Erzeugung von in der Zeit versetzten Ausgaben derselben Daten der Zelle an den beiden Ausgangsanschlüssen zu gestatten.

2. Vorrichtung zur Verarbeitung von Zellen nach Anspruch 1, dadurch gekennzeichnet, daß der Speicher (10), der aus Speichergrundmodulen (0) für Zellendaten besteht, der Kontrolle eines Zeigergenerators (15) für das Schreiben, der durch eine erste Zeitbasis (16) im Takt des ersten Zeitgebers gesteuert wird, und zweier Zeigergeneratoren (17, 18) für das Lesen unterstellt wird, die durch eine zweite Zeitbasis (16') gesteuert werden, die, vom zweiten Zeitgeber eingetaktet, über sie die für die Ausgaben derselben Zellendaten an den Ausgangsanschlüssen des Speichers eingefügte zeitliche Versetzung regelt.

3. Vorrichtung zur Verarbeitung von Zellen nach Anspruch 2, dadurch gekennzeichnet, daß die zweite Zeitbasis (16') vom programmierbaren Typ ist, um eine Änderung der zeitlichen Verschiebung zwischen den Ausgaben der Zellendaten an den Ausgangsanschlüssen des Speichers zu gestatten.

4. Vorrichtung zur Verarbeitung von Zellen nach wenigstens einem der Ansprüche 2 und 3, dadurch gekennzeichnet, daß der Speicher (10) Speichergrundmodule aufweist, die jeweils zwei Riegel (20L, 20H) zur Datenspeicherung mit demselben Eingang (D) für Zellendaten, einem getrennten Schreibsteuereingang (E) und einen Datenausgang (Q) aufweisen, der getrennt mit zwei verschiedenen Anschlüssen (21H, 22H oder 21L, 22L) verbunden ist, die jeweils von einem unterschiedllchen Zeigergenerator (17, 18) für das Lesen über denjenigen der Lesesteueranschlüsse (L1, L2) gesteuert werden, der diesen Generator bedient bzw. steuert.

5. Vorrichtung zur Verarbeitung von Zellen nach wenigstens einem der Ansprüche 2 und 3, deren Speicher (10) eine Kapazität von "P" Bits hat, die praktisch einem Speichern von vier Zellen entspricht, dadurch gekennzeichnet, daß die beiden Speicherungsriegel (20L, 20H) der Spelchergrundmodule, die dieser Speicher aufweist, wechselweise beim Schreiben mit einer Periode gesteuert werden, die dem Doppelten der Dauer einer Zelle entspricht, und eine abwechselnde Speicherung eines Zellendatums und des Datums mit dem gleichen Rang der zweiten Zelle, die folgt, in Höhe desselben Speichermoduls gestatten.
